(19) Europäisches Patentamt / European Patent Office / Office européen des brevets

(11) **EP 4 586 219 A1**

(12) **EUROPEAN PATENT APPLICATION**

(43) Date of publication:
**16.07.2025  Bulletin 2025/29**

(21) Application number: **24151356.3**

(22) Date of filing: **11.01.2024**

(51) International Patent Classification (IPC):
**G06V 10/82** $^{(2022.01)}$     **G06N 3/045** $^{(2023.01)}$
**G06V 20/64** $^{(2022.01)}$

(52) Cooperative Patent Classification (CPC):
**G06V 10/82; G06N 3/045; G06N 3/084; G06V 20/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **3Shape A/S**
**1060 Copenhagen K (DK)**

(72) Inventor: **CHOJNACKI, Marek**
**1060 Copenhagen K (DK)**

(74) Representative: **Guardian**
**IP Consulting I/S**
**Diplomvej, Building 381**
**2800 Kgs. Lyngby (DK)**

(54) **IMPROVED GRAPH NEURAL NETWORK MODEL FOR DENTAL THREE-DIMENSIONAL MODELS**

(57)    A computer-implemented method for training a graph neural network (GNN) model (106) is provided. The method includes generating a graph (404, 406) corresponding to a three-dimensional (3D) mesh (302) wherein the 3D mesh (302) is associated with a surface information of at least a portion of a dental arch. Further, ground truth data indicating features of the 3D mesh (302) to be predicted by the GNN model (106) is obtained. The graph (404, 406) of the 3D mesh (302) and the ground truth data are provided, as an input, to the GNN model (106) wherein the GNN model (106) comprises a set of convolution layers. Furthermore, a set of weights is applied to each convolution layer of the set of convolution layers, wherein the set of weights corresponds to differences between features of nodes of the graph (404, 406). The method further comprises receiving, as an output of the GNN model (106) with the applied set of weights, output data indicating predicted features of the 3D mesh (302). The method additionally comprises iteratively updating trainable parameters of the GNN model (106) based on comparing the output data to the ground truth data until a predefined loss function threshold is reached.

FIG. 5

**Description**

**Technical Field**

An example embodiment of the present disclosure generally relates to graph neural network models and more particularly relates to computer-implemented methods and systems for segmentation and/or classification of three-dimensional models based on an improved graph neural network model.

**Background**

Recent advancements in technologies have led to innovations in various industries, such as the dental industry. Typically, users, such as dentists may acquire images of dental arch of patients using different types of tools and software. The acquired images and/or three-dimensional (3D) models constructed based on the acquired images may be processed to determine various conditions, such as unhealthy tissues in gums, gum diseases, tooth cavities and so forth. Furthermore, the processing may be performed to segment different types of teeth based on, for example, molar teeth, premolar teeth, incisor teeth and canine teeth. Moreover, the acquired images may be processed to determine if a tooth in the acquired image is a baby tooth or an adult tooth (such as a permanent tooth).

Conventional methods to analyze a 3D model of the dental arch may include utilizing convolutional neural networks (CNN) models on 2D images obtained from the 3D model, for object recognition and segmentation tasks. The obtained images may be input to the CNN model, and the CNN model may be utilized to detect the various conditions associated with the dental arch, and segment different types of the teeth. CNN models cannot use directly, as input, 3D models and require instead certain data sampling such as creating 2D images. Therefore, if applying the CNN model to a 3D model is desired, obtaining multiple 2D images from the 3D model is needed. Then, the 2D images may be input to the CNN model for performing, for example, segmentation tasks. This process may be cumbersome to perform, especially since back-projection of results to the 3D model is needed to obtain the segmentation in 3D format. A method to process 3D models directly is therefore desired as this would improve efficiency, speed, and overall simplicity of processing 3D models, for example dental 3D models. For this purpose, it has been discovered that graph neural networks (GNN) models may be utilized on 3D models represented by graphs, for a task of object recognition and/or segmentation. 3D models may be constructed from scan images obtained by scanning objects of interest. The images may be processed to generate a three-dimensional (3D) mesh, and the 3D mesh may further be mapped to a graph. The graph may be input to the GNN model to detect the various conditions associated with the dental arch, and segment different types of the teeth. A challenge with using the GNN model is calculation of weights associated with edges and/or nodes of the graph, and often these edges and/or nodes may be seen in a way as pixels are seen by the CNN model, namely as elements of identical shape and area. While pixels carry the same portion of information, the edges and/or nodes of the graph may comprise various amounts of information. Therefore, new methods for weights calculation using a given graph representation are desired.

Therefore, improved systems and methods for processing of the three-dimensional models of the dental arch may be beneficial.

**Summary**

A computer-implemented method and a system for training a graph neural network (GNN) model are provided. Further, a computer-implemented method and a system for predicting label values associated with facets of a three-dimensional (3D) mesh representing at least a portion of a dental arch are provided. In addition, a use of the computer-implemented method and the system for predicting the label values is provided.

In one aspect, a computer-implemented method for training a graph neural network (GNN) model is provided, the method comprising:

- generating a graph corresponding to a three-dimensional (3D) mesh, wherein the 3D mesh is associated with a surface information of at least a portion of a dental arch,
- obtaining ground truth data indicating features of the 3D mesh to be predicted by the GNN model,
- providing, as an input, the graph of the 3D mesh and the ground truth data to the GNN model, wherein the GNN model comprises a set of convolution layers,
- applying a set of weights to each convolution layer of the set of convolution layers, wherein the set of weights correspond to differences between nodes of the graph,
- receiving, as an output of the GNN model with the applied set of weights, output data indicating predicted features of the 3D mesh, and
- iteratively updating trainable parameters of the GNN model based on comparing the output data to the ground truth data until a predefined loss function threshold is reached.

The differences between nodes of the graph may relate to geometric relation between nodes of the graph and/or between features of nodes of the graph.

In the method according to an embodiment, the set of weights may account for variability of nodes and/or edges of the graph.

In some embodiments, the computer-implemented method may further include receiving the surface information of at least the portion of the dental arch, from a handheld intraoral scanning device.

In some embodiments, the computer-implemented method may further include generating the 3D mesh based on the captured surface information.

In some embodiments, the computer-implemented method may further include generating the graph corresponding to the 3D mesh based on a direct mapping technique. The direct mapping technique may include transforming vertices of each facet of the 3D mesh into nodes of the graph and transforming edges of each facet of the 3D mesh into edges of the graph, to generate the graph.

In some embodiments, the computer-implemented method may further include generating the graph corresponding to the 3D mesh based on an edge mapping technique. The edge mapping technique may include transforming edges of each facet of the 3D mesh into nodes of the graph. If two edges of the 3D mesh belong to a same facet, then corresponding nodes in the graph are connected to form edges of the graph.

In some embodiments, the computer-implemented method may further include generating the graph corresponding to the 3D mesh based on a facet mapping technique. The facet mapping technique may include transforming each facet of the 3D mesh into a corresponding node of the graph. If two facets of the 3D mesh are connected, then two corresponding nodes of the graph are connected. The facets of the 3D mesh are connected if they share a common edge.

The ground truth data may comprise a label value for each facet of the 3D mesh. The output data may comprise, in this case, a predicted label value for each facet of the 3D mesh. The GNN model may thereby perform a classification task per facet of the 3D mesh, such as jaw segmentation into individual teeth.

The ground truth data may comprise, in an example, a label value for the 3D mesh. The output data may comprise, in this case, a predicted label value for the 3D mesh. The GNN model may thereby perform a classification task for whole of the 3D mesh, such as classifying jaws into upper or lower jaws.

In an embodiment, the set of weights may be determined by:

- for each node of the graph ordering associated edges based on a criterion to obtain a sequence of ordered edges and assigning a weight to each ordered edge based on a position of the each ordered edge in the sequence. Thereby, same weights may be assigned to edges in same positions across different sequences of ordered edges. For example, all edges in the first position across the different sequences of ordered edges will have same weights assigned. The set of weights may be a set of edge weights in this case.

The criterion for ordering edges associated to a node may be, for example, edge size or facet area of neighboring facets. The criterion for ordering edges may be different for different convolution layers of the GNN model which may improve flexibility during design of the GNN model.

In a further embodiment, the set of weights may be determined by:

- for each node of the graph applying a first machine learning algorithm to corresponding node features and assigning the weight to corresponding node based on output of the applied first machine learning algorithm such that the weight has same value every time the corresponding node is used in a convolution layer of the set of convolution layers. Each convolution layer of the GNN model may utilize a different first machine learning algorithm. The set of weights may be a set of node weights in this case.

The first machine learning algorithm may be comprised in the GNN model. Thereby, the first machine learning algorithm can be trained together with the GNN model. Alternatively, the first machine learning algorithm may be a separate algorithm from the GNN model. The output of the first machine learning algorithm may be given as the input to the GNN model thereby not being a part of the GNN model training.

In a further embodiment, the set of weights may be determined by:

- for each oriented pair of neighboring nodes of the graph applying a second machine learning algorithm to features of the corresponding neighboring nodes and assigning the weight to the edge comprising the corresponding neighboring nodes based on output of the applied second machine learning algorithm. The set of weights may be the set of edge weights in this case. Each pair of neighboring nodes may be oriented from a first neighboring node towards a second neighboring node or vice versa. For example, neighboring nodes A and B may form an oriented pair of neighboring nodes AB or BA. Orientation of the neighboring nodes defines input order to the second machine learning algorithm. Thereby, different weights may be assigned one edge, depending on the orientation of neighboring nodes delimiting that one edge. Each convolution layer of the GNN model may comprise a separate second machine learning algorithm.

The second machine learning algorithm may be comprised in the GNN model. Thereby, the second machine learning algorithm can be trained together with the GNN model. Alternatively, the second machine learning algorithm may be a separate algorithm from the GNN model. The output of the second machine learning algorithm may be given as the input to the GNN model, thereby not being a part of the GNN model training. The second machine learning algorithm may be the same as the first machine learning algorithm.

In a further embodiment, the set of weights may be determined by:

- for each node of the graph ordering associated edges based on the criterion to obtain the sequence of ordered edges,
- providing features corresponding to the ordered associated edges to a third machine learning algorithm, and
- assigning the weight to each ordered edge based on output of the third machine learning algorithm. The set of weights may be the set of edge weights in this case. Each convolution layer of the GNN model may comprise a different third machine learning algorithm.

The third machine learning algorithm may be comprised in the GNN model. Thereby, the third machine learning algorithm can be trained together with the GNN model. Alternatively, the third machine learning algorithm may be given as input to the GNN model thereby not being a part of the GNN model training. The third machine learning algorithm may be the same as the first and/or second machine learning algorithm.

The set of weights may be trainable parameters of the GNN model. Thereby, the set of weights are adjustable during the GNN model training. Alternatively, the set of weights may be pre-determined and may form a part of the input to the GNN model.

The method according to the disclosure may further comprise assigning the set of weights to nodes such that a maximum value of convolution is obtained. Same weights may be used for each node. A number of weights can be smaller than maximum number of neighbors and in such case, the assignment of weights may include selection of nodes to which the set of weights is assigned.

The GNN model may comprise a histogram pooling layer. The method according to an embodiment may comprise:

- determining distributions of node features over the nodes of the graph,
- generating the histogram pooling layer by discretization of determined distributions, wherein the histogram pooling layer is defined by histogram pooling layer parameters.

According to an embodiment, a computer-implemented method for predicting label values associated with facets of a three-dimensional (3D) mesh representing at least a portion of a dental arch is disclosed, the method comprising:

- generating a first 3D mesh associated with a first surface information of at least a portion of a first dental arch,
- generating a first graph based on the received first 3D mesh,
- providing, as an input, the generated first graph to a trained graph neural network (GNN) model,
- receiving, as an output, a first set of predicted label values associated with the facets of the first 3D mesh, and wherein the trained GNN model is trained according to any presented embodiment. This embodiment may be related to facet classification of 3D meshes, for example to identify facets belonging to individual teeth or gingiva, or to identify presence of a dental condition on teeth.

The trained graph neural network (GNN) model may comprise the histogram pooling layer determined by:

- determining distributions of node features over the nodes of the graph,
- generating the histogram pooling layer by discretization of determined distributions, wherein the histogram pooling layer is defined by histogram pooling layer parameters.

According to an embodiment, a computer-implemented method for predicting label values associated with a three-dimensional (3D) mesh representing at least a portion of a dental arch is disclosed, the method comprising:

- generating the first 3D mesh associated with a first surface information of at least a portion of a first dental arch,
- generating the first graph based on the received first 3D mesh,

- providing, as the input, the generated first graph to the trained graph neural network (GNN) model,
- receiving, as the output, the first set of predicted label values associated with the first 3D mesh, and wherein the trained GNN model is trained according to any presented embodiment. This embodiment may be related to classification of complete 3D meshes, for example classifying 3D meshes as upper and/or lower jaws.

Generating the first graph based on the received first 3D mesh may be performed by transforming facets of the first 3D mesh into nodes and edges of the first graph.

The computer-implemented method for predicting label values may be used in any one of the following:

a) segmentation of a 3D mesh of at least a portion of a dental arch into at least one of a gingiva or a tooth,
b) detection of one or more objects based on the 3D mesh of the at least the portion of the dental arch,
c) detection and scoring of one or more diseases associated with a dental condition of the at least the portion of the dental arch, based on the 3D mesh of the at least the portion of the dental arch,
d) recognition of a type of one or more teeth based on the 3D mesh of the at least the portion of the dental arch, and/or
e) determination of an amount of tooth wear and scoring of the amount of the tooth wear based on the 3D mesh of the at least the portion of the dental arch.

In yet another aspect, a system comprising a non-transitory computer readable medium having stored thereon computer executable instructions is provided. The instructions, when executed by a processing circuitry, may cause the processing circuitry to perform any of the computer-implemented methods.

The system may comprise a computer capable of carrying out the method according to any of the computer-implemented methods.

The non-transitory computer readable medium may comprise instructions which, when executed by a computer, cause the computer to carry out the method according to one or more embodiments of the disclosure.

A computer program product may be embodied in the non-transitory computer readable medium. The computer program product may comprise instructions which, when executed by a computer, cause the computer to carry out the method according to any of the embodiments of the disclosure.

The foregoing summary is illustrative only and is not intended to be in any way limiting. In addition to the illustrative aspects, embodiments, and features described above, further aspects, embodiments, and features will become apparent by reference to the drawings and the following detailed description.

According to the present disclosure, a computer-implemented method, a system and a use of the computer-implemented method and the system are provided. One of the purposes of the present disclosure is to provide an improved architecture of a graph neural network (GNN) model, corresponding training method, and use of such for object recognition and segmentation. Another purpose of the present disclosure is to utilize the trained GNN model to predict label values associated with a three-dimensional (3D) mesh of at least a portion of a dental arch. Yet another purpose of the present disclosure is to use the predicted label values for various applications in the field of dentistry.

Conventional methods may be based on using convolutional neural networks (CNN) models or graph neural networks (GNN) models for object recognition and segmentation. The CNN model may be applied to two-dimensional (2D) images of the dental arch and output of the CNN model may be used for the object recognition and segmentation. However, the disadvantage of the CNN model is that it cannot be used directly on the 3D models. The GNN model may, on the other hand, be applied to a graph associated with the 3D model obtained from the images of the dental arch. The output of the GNN model may be used to detect the various conditions associated with the dental arch, and/or segment different types of teeth. However, weights associated with edges and nodes of the graph, in a conventional GNN model if calculated at all, may be calculated in a non-optimal way, for example by treating the edges and/or nodes of the graph in a way pixels are treated by the CNN model in processing 2D images. Weights calculated in this conventional way do not reflect relationship between neighboring edges and/or nodes of the graph. In other words, weights calculated using conventional methods do not account for variability of nodes and/or edges.

On the other hand, the computer-implemented method of the present disclosure enables training of a GNN model that may be effective in accurate detection of the various conditions associated with the dental arch, and segment different types of the teeth. The GNN model according to the disclosure utilizes the set of weights reflecting relationship between features of nodes of the graph associated with a three-dimensional (3D) mesh. In this way, an adaptive GNN model may be obtained which may calculate its own weights based on relationships between neighboring nodes and edges in the graph. In effect, predictability of the GNN model may be improved. In some embodiments, the computer-implemented method provides a plurality of methods to determine the plurality of weights for each layer of a set of convolution layer of the GNN model. Each layer of the GNN model may be trained to determine a different set of weights to be applied in the respective convolution layer. The trained GNN model of the present disclosure may require a single graph for the task of object recognition and segmentation. The GNN model trained by the computer-implemented method of the present disclosure enables accurate and efficient detection of the various conditions associated with the dental arch, and segment different types of the teeth.

## Brief Description of the figures

The present disclosure is illustrated by way of example and not by way of limitation in the figures of the accompanying drawings, in which the like reference numerals indicate like elements and in which:

FIG. 1 is a diagram that illustrates a network environment of a system for training of a graph neural network (GNN) model and utilization of the trained GNN model, in accordance with an example embodiment;

FIG. 2 illustrates a block diagram of the system of FIG. 1, in accordance with an example embodiment;

FIG. 3 is a schematic diagram that illustrates a three-dimensional (3D) mesh of a dental arch, in accordance with an example embodiment;

FIG. 4A, FIG. 4B and FIG. 4C collectively illustrate schematic diagrams for generation of a graph using the 3D mesh, in accordance with an example embodiment;

FIG. 5 is a schematic diagram that illustrates application of a plurality of weights of the graph for training of the GNN model, in accordance with an example embodiment;

FIG. 6 is a flowchart that depicts training of the GNN model, in accordance with an example embodiment;

FIG. 7 is a diagram that depicts utilization of the trained GNN model for a prediction task, in accordance with an example embodiment;

FIG. 8 is a schematic diagram illustrating utilization of a GNN model with a histogram pooling layer for a classification task, in accordance with an example embodiment; and

FIG. 9A, FIG. 9B and FIG. 9C illustrate exemplar diagrams depicting various applications of the trained GNN model, in accordance with another example embodiment.

## Detailed description

In the following description, for purposes of explanation, numerous specific details are set forth in order to provide a thorough understanding of the present disclosure. It will be apparent, however, to one skilled in the art that the present disclosure may be practiced without these specific details. In other instances, systems and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Further, the terms "processor", "controller" and "processing circuitry" and similar terms may be used interchangeably to refer to the processor capable of processing information in accordance with embodiments of the present disclosure. Further, the terms "electronic equipment", "electronic devices" and "devices" are used interchangeably to refer to electronic equipment monitored by the system in accordance with embodiments of the present disclosure. Thus, use of any such terms should not be taken to limit the spirit and scope of embodiments of the present disclosure.

The embodiments are described herein for illustrative purposes and are subject to variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

As used in this specification and claims, the terms "for example" "for instance" and "such as", and the verbs "comprising," "having," "including" and their other verb forms, when used in conjunction with a listing of one or more components or other items, are each to be construed as open ended, meaning that that the listing is not to be considered as excluding other, additional components or items. Other terms are to be construed using their broadest reasonable meaning unless they are used in a context that requires a different interpretation.

A computer-implemented method and a system for training a graph neural network (GNN) model are provided. Further, a computer-implemented method and a system for predicting label values associated with facets of a three-dimensional (3D) mesh representing at least a portion of a dental arch are provided. In addition, a use of the computer-implemented method and the system for predicting the label values is provided.

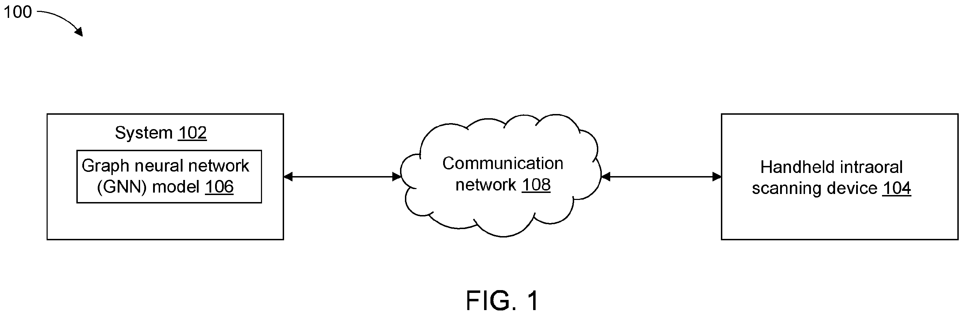

For instance, an exemplary network environment of the system for training of the GNN model and utilization of the trained GNN model is provided below with reference to FIG. 1.

FIG. 1 is a diagram that illustrates an exemplary network environment 100 of a system 102 for training of the GNN model and utilization of the trained GNN model, in accordance with an example embodiment. The network environment 100 may include the system 102 and a handheld intraoral scanning device 104. The system 102 may further include a GNN model 106. The network environment 100 may further include a communication network 108. In an embodiment, the GNN model 106 may be communicatively coupled to the system 102 via the communication network 108. Further, it is possible that one or more components may be rearranged, changed, added, and/or removed without deviating from the scope of the present disclosure.

The system 102 may include processing capabilities to train the GNN model 106 and use the trained GNN model 106 for various applications. The system 102 may be configured to train the GNN model 106 for a prediction task. The system 102 may further be configured to utilize the trained GNN model 106 in various dental applications, such as detection of a type of tooth, for example a molar or an incisor, segmentation to identify a tooth tissue and gingiva tissue, detection of gum diseases and/or tooth diseases and so forth.

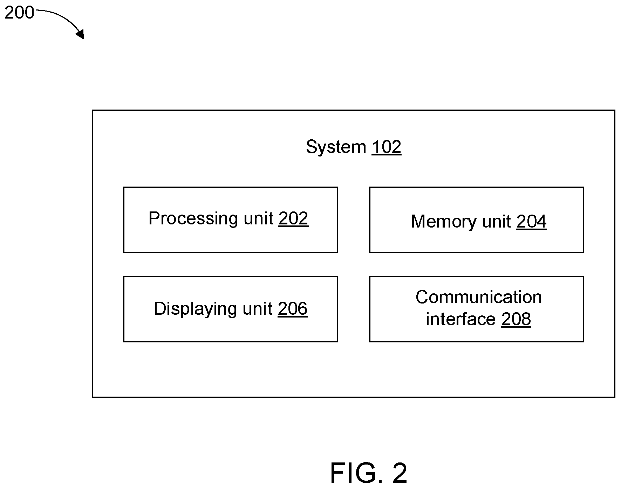

In an example embodiment, the system 102 may be embodied in one or more of several ways as per the required implementation. For example, the system 102 may be embodied as a cloud-based service or a cloud-based platform. In each of such embodiments, the system 102 may be communicatively coupled to the components shown in FIG. 1 to conduct the desired operations and wherever required modifications may be possible within the scope of the present disclosure. The system 102 may be a standalone unit configured to train the GNN model 106 and use the trained GNN model 106 for various applications. In an embodiment, the system 102 may be implemented in a user equipment (UE) that may be utilized by users, such as dentists. Examples of the system 102 includes, but may not be limited to, a mobile phone, a smartphone, a portable computer, and the like that are portable in themselves or as a part of another portable/mobile object. The system 102 may include a processing unit, a memory unit, and a communication interface. Additional, different, or fewer components may be provided. For example, the system 102 may be configured to execute and run mobile applications such as dentistry applications to be utilized by the dentists and the like. Details of components of the system 102 are further provided, for example, in FIG. 2.

The handheld intraoral scanning device 104 may include enhanced processing capabilities that may be required to capture surface information of a dental arch of a user, such as a patient. For example, the surface information may be captured in the form of one or more images of the dental arch. The handheld intraoral scanning device 104 may be configured to capture the one or more images during a scanning session of the dental arch. The one or more images may include images of the dental arch of the patient from various angles. The one or more images may be captured by the dentist in the scanning session of the dental arch of the user, by use of the handheld intraoral scanning device 104. The handheld intraoral scanning device 104 may be further configured to transmit the surface information to the system 102.

The GNN model 106 may typically be a neural network that may be configured to process data represented by a graph. The GNN model 106 may include a set of convolution layers to process the graph received as an input. Each set of convolution layers may be used to calculate node features of the graph using a node of interest (such as a center of convolution) and neighboring nodes of the node of interest. Utilizing the node of interest in the convolution is not a requirement, and if it is performed, it may be referred to as self-looping. Each of the set of convolution layers may be depicted as following:

$$H_i^{(k+1)} = \sigma\left(\frac{1}{N}\sum_j^{neig} H_j^{(k)}\ F^{(k)} + b^{(k)}\right) \qquad (1)$$

where $H_i^{(k)}$ is a feature vector of node "I" of the graph, which is an input of a $k^{th}$ convolution layer. Further, $H_i^{(k+1)}$ is a feature vector of the node "I", which is an output of the $k^{th}$ convolution layer. Furthermore, $\sigma$ is an activation function, e.g., a rectified linear unit (ReLU) activation function. $F^{(k)}$ in a standard GNN model is a vector of weights of the convolution layer, referred to as a trainable parameter. Moreover, $b^{(k)}$ is a vector of biases of the convolution layer (such as a trainable parameter).

$\sum_j^{neig}$ is a summation over neighboring nodes and in some embodiments, including the node of interest. In an embodiment, using the node of interest may be optional. In case the node of interest is used for the convolution, term (1/N) is a normalization factor, such as a number of neighboring nodes plus a value "1".

A technically effective addition to the feature vector $H_i^{(k+1)}$ may be to introduce the set of weights W for the nodes and/or edges of the graph at each of the set of convolution layers. The appended equation for the feature vector $H_i^{(k+1)}$ may be expressed as:

$$H_i^{(l+1)} = \sigma \left( \frac{1}{A} \sum_j^{neig} H_j^{(l)} F^{(l)} W_{ij}^{(l)} + b^{(l)} \right) \qquad (2)$$

where $W_{ij}$ is a weight for respective edge or node connection between the nodes "I" and "J". The weights accounting for differences between neighboring nodes $W_{ij}$ will be also referred to as weights W. In an embodiment, the weights $W$ may need not be symmetric (for example, $W_{ij}$ may not be equal to $W_{ji}$). If all edge weights associated with a node are equal, it is called a node weight. The weights $W$ of the improved GNN model according to the disclosure reflect the relationship between edges and/or nodes of the graph and account for variability of nodes and/or edges of the graph. These weights $W$ may therefore assist in accurate representation of the 3D mesh as it is processed inside the GNN model. The weights $W$ may be input to the GNN model 106. In some embodiments, the weights $W$ may be trainable parameters. The weights $W$ being the trainable parameters may be calculated with other trainable parameters, for example, using log loss minimalization with backpropagation. Parameter A in equation (2) is a normalization factor and can, for example, be a sum of the weights Wij $\sum_j^{neig} W_{ij}$.

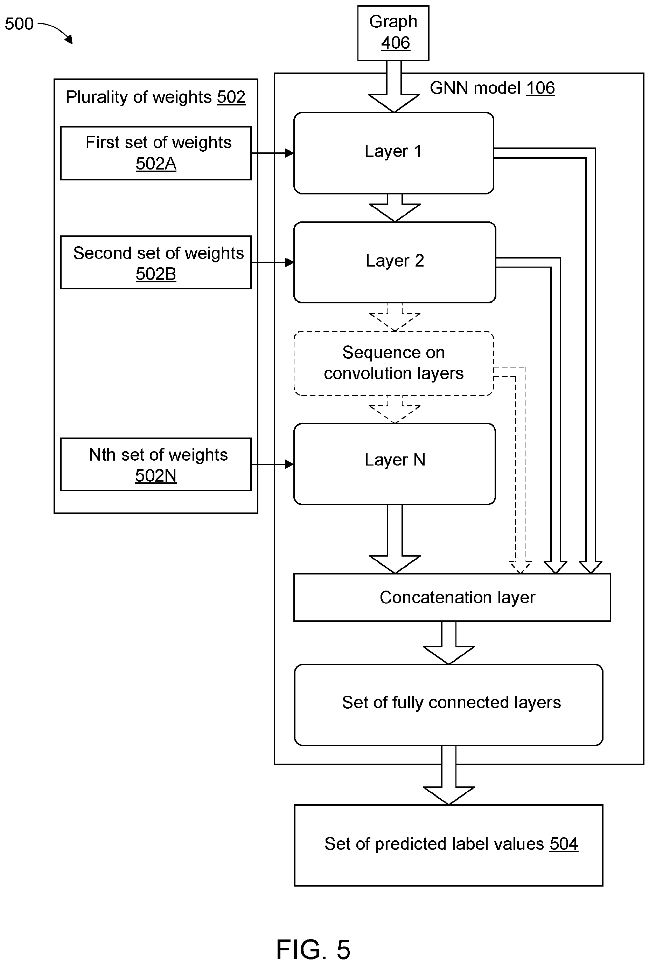

The GNN model 106 may have the set of convolution layers, and outputs of the set of convolution layers may be combined or concatenated. In an embodiment, each set of convolution layers may use the same edge weights $W$. Details of output of the GNN model 106 are further provided, for example, in FIG. 5. As weights $W$ may be trainable parameters, the GNN model may be configured to adaptively learn, through training, to adjust the weights $W$ such that a particular characteristic of the information present in the 3D mesh may influence the GNN model performance, for example prediction of a dental condition. For example, in case of tooth wear, the GNN model may adapt its weights $W$ to include relationship of neighboring nodes and/or edges, where curvature or surface normals represent the most important contributing factor to tooth wear. In the case of caries, texture color values may represent the most important contributing factor to weights determination.

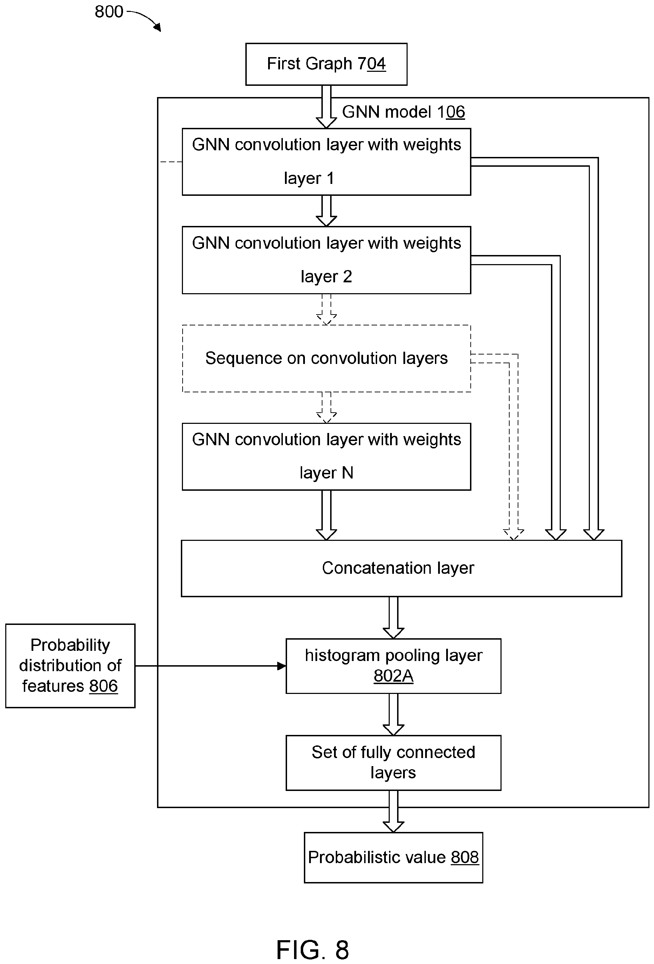

In some embodiments, the GNN model 106 may further include a histogram pooling layer 802A. The histogram pooling layer 802A may be configured to lower a size of data input to the GNN model 106. In particular, the histogram pooling layer 802A may lower the number of features generated by convolution layers. Generally, the input to the GNN model 106 may be the graph with an arbitrary number of nodes. Thus, the histogram pooling layer may lower the size of the data from any arbitrary size to a well-defined size. Details of an exemplary GNN model with the histogram pooling layer are further provided, for example, in FIG. 8.

The communication network 108 may be wired, wireless, or any combination of wired and wireless communication networks, such as cellular, wireless fidelity (Wi-Fi), internet, local area networks, or the like. In accordance with an embodiment, the communication network 108 may be one or more wireless fullduplex communication channels. In one embodiment, the communication network 108 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks (for e.g. LTE-Advanced Pro), 5G New Radio networks, ITU-IMT 2020 networks, code division multiple access (CDMA), wideband code division multiple access (WCDMA), wireless fidelity (Wi-Fi), wireless LAN (WLAN), Bluetooth, Internet Protocol (IP) data casting, satellite, mobile ad-hoc network (MANET), and the like, or any combination thereof. The handheld intraoral scanning device 104 may be configured to communicate with the one or more client devices 106 via the communication network 108.

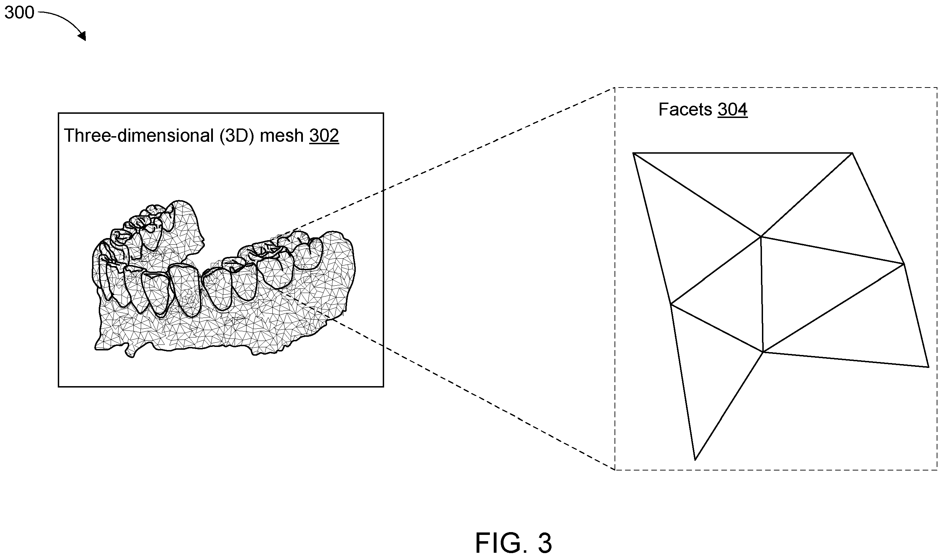

In operation, the GNN model 106 may be trained for the task of object recognition and/or 3D object segmentation in the field of dentistry. In order to train the GNN model 106, the system 102 may receive surface information of at least a portion of the dental arch of a subject, such as a patient. In some embodiments, the surface information may be received from the handheld intraoral scanning device 104. For example, the surface information may correspond to two-dimensional (2D) images of the dental arch captured by use of the handheld intraoral scanning device 104. Furthermore, the system 102 may generate a plurality of three-dimensional (3D) meshes based on the captured surface information of the 2D images. Details of the reception of the surface information and generation of the plurality of 3D meshes are further provided, for example, in FIG. 3.

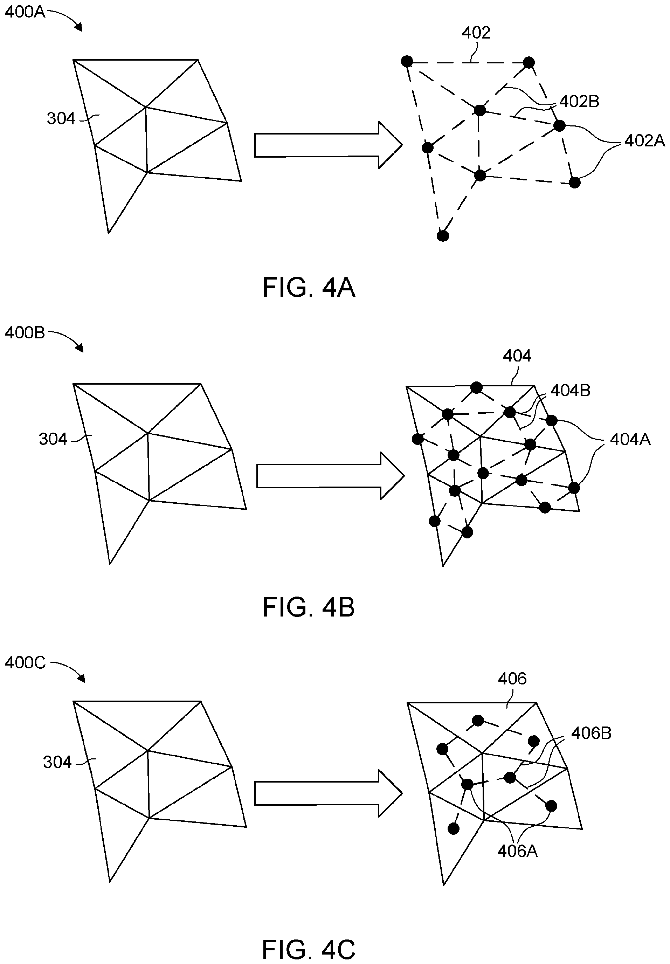

The system 102 may be further configured to obtain a label value corresponding to each of the plurality of 3D meshes. For example, the label values may be manually assigned by a user, such as the dentist or any other clinical professional, for various portions (groups of polygons) of the dental arch in the plurality of 3D meshes. Based on the plurality of 3D meshes, the system 102 may be configured to generate a plurality of graphs. The plurality of graphs and the obtained label values of each of the plurality of 3D meshes, for example assigned manually, may be used to generate a training dataset for the GNN model 106 as the annotated data may constitute a ground truth data set for the supervised training process. The training dataset may represent a target population, which may be defined by age range, a type of the handheld intraoral scanning device 104, or a quality of a scan. In some embodiments, the training dataset may be result of clinical research and labelling does not have to be done on dental scans or the 3D mesh of the scans. Details of generation of the plurality of graphs are further provided, for example, in FIG. 4A, FIG. 4B and FIG. 4C.

The system 102 may be further configured to provide, as an input, each of the plurality of graphs and the corresponding label values of the respective 3D mesh included in the training dataset, to the GNN model 106. For example, the system 102 may provide each graph and corresponding label values one by one or sequentially to the GNN model 106 for the training. The system 102 may further calculate a plurality of weights W for each of the plurality of graphs. The system 102 may apply a set of weights W of the determined plurality of weights W of the input graph to each convolution layer of the set of convolution layers of the GNN model 106. The set of weights W applied to each convolution layer may be associated with a set of nodes or a set of edges of the input graph to be processed by the respective convolution layer. Details of the determination of the plurality of weights $W$ and application of the set of weights $W$ to the set of convolution layers are further provided, for example, in FIG. 5.

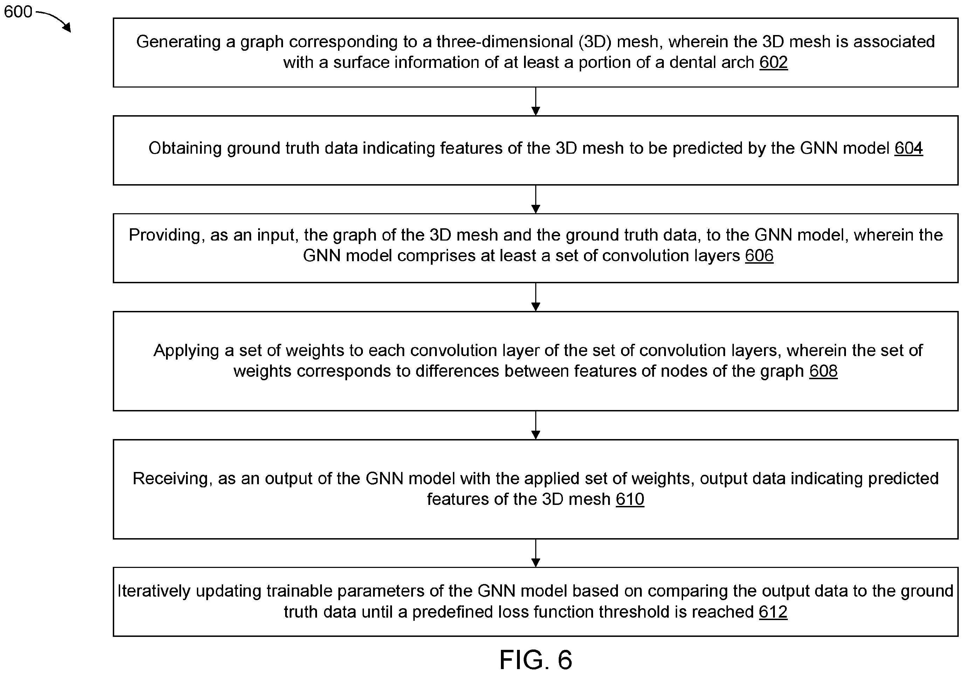

The system 102 may further receive as an output of the GNN model 106, a set of predicted label values. The set of predicted label values may be associated with features of the input corresponding facets of the 3D mesh. The 3D mesh may correspond to the graph input to the GNN model 106. The set of predicted label values may indicate different segments of the dental arch, or a portion of the dental arch associated with the 3D mesh. Based on the output of the GNN model 106, the system 102 may train the GNN model 106. The output of the GNN model 106 may be verified as correct by a dental professional. The system 102 may iteratively update the set of weights W and/or further trainable parameters based on the set of predicted label values, until a predefined loss function threshold is reached. The predefined loss function may be calculated based on the set of predicted label values and the obtained label values. Details of the iterative training of the GNN model 106 are further provided, for example, in FIG. 6.

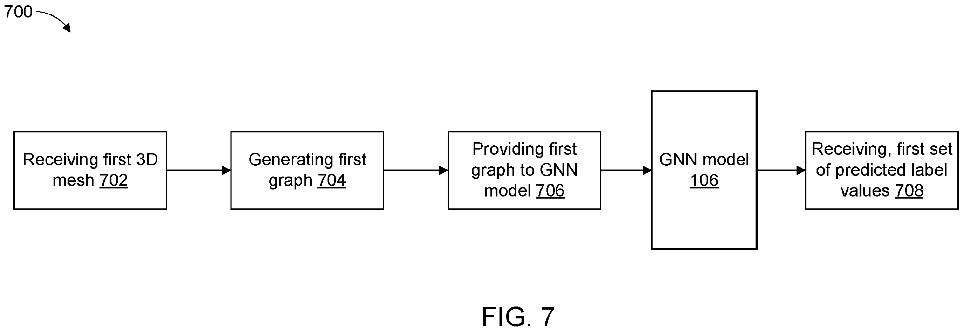

The trained GNN model 106 may be utilized by the system 102 for various applications. In an exemplary scenario, a subject, for example, a patient may require a dental treatment. In such a case, the system 102 may be utilized by the dentist to provide the dental treatment to the patient. To start the dental treatment, the handheld intraoral scanning device 104 may be utilized by the dentist to capture the 2D images of a first dental arch of the patient. Based on the captured plurality of 2D images, the handheld intraoral scanning device 104 may provide a first surface information. Details of the capture of the plurality of 2D images 110 and providing of the surface information is further provided, for example, in FIG. 7.

The system 102 may further generate a first 3D mesh associated with the first surface information of at least a portion of the first dental arch of the patient. The system 102 may be further configured to generate a first graph based on the received first 3D mesh, for example based on a transformation of facets of the first 3D mesh into nodes and edges of the first graph. The first graph may be provided, as an input, to the trained GNN model 106. The system 102 may further receive, as an output, a first set of predicted label values associated with the facets of the first 3D mesh. The first set of predicted label values may indicate different segments of the at least the portion of the first dental arch, such as teeth or gingiva regions. Thus, the trained GNN model 106 may be utilized for the task of segmentation of the portions of the first dental arch. Details of the usage of the trained GNN model 106 for the task of segmentation are further provided, for example, in FIG. 7.

In some embodiments, the trained GNN model 106 may be utilized for the task of 3D mesh or graph classification. In such a case, the GNN model 106 may include an additional histogram pooling layer (an exemplary architecture of such a GNN model is depicted in FIG. 8). For the task of 3D mesh or graph classification, the system 102 may provide a graph, such as the first graph corresponding to the first 3D mesh, to the GNN model 106. The system 102 further determines probability distributions of node features over the nodes of the first graph and generates the histogram pooling layer by discretization of determined distributions, wherein the histogram pooling layer is defined by histogram pooling layer parameters. The system 102 may further provide the probability distributions of the features to the histogram pooling layer. The system 102 may be further configured to receive, as the output, a probabilistic value that indicates a type (or a classification) of the first 3D mesh. Details of the GNN model with the histogram pooling layer are further provided, for example, in FIG. 8. The type of a 3D mesh may be a type of a tooth, such as molar, pre-molar, canine or incisor tooth. Moreover, the type of a 3D mesh may be lower jaw or upper jaw.

FIG. 2 illustrates a block diagram 200 of the system 102, in accordance with an example embodiment. FIG. 2 is explained in conjunction with elements of FIG. 1. The system 102 may include at least one processing unit (hereinafter, also referred to as "processing unit 202"), a memory unit 204 and a communication interface 208.

The processing unit 202 may be embodied in a number of different ways. For example, the processing unit 202 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. In an embodiment, the processing unit 202 may be embodied as a high-performance microprocessor having series of System on Chip (SOCs) which includes relative powerful and power-efficient Graphics Processing Units (GPUs) and Central Processing Units (CPUs) and a small form factor. As such, in some embodiments, the processing unit 202 may include one or more processing cores configured to perform independently. A multi-core processor may enable multiprocessing within a single physical package. Additionally, or alternatively, the processing unit 202 may include one or more processors configured in tandem via the bus to enable independent execution of instructions, pipelining and/or multithreading. In some embodiments, the processing unit 202 may be configured to train the GNN model 106. The processing unit 202 may further provide the graphs as the input to the GNN model 106, and receive the output from the GNN model 106. The processing unit 202 may further provide a segmented or a classified 3D mesh or graph, based on the output of the GNN model 106.

Additionally or alternatively, the processing unit 202 may include one or more processors capable of processing large volumes of workloads and operations to provide support for big data analysis. In an example embodiment, the processing unit 202 may be in communication with the memory unit 204 via a bus for passing information among components of the system 102.

The memory unit 204 may be non-transitory and may include, for example, one or more volatile and/or non-volatile memories. In other words, for example, the memory unit 204 may be an electronic storage device (for example, a computer readable storage medium) comprising gates configured to store data (for example, bits) that may be retrievable by a machine (for example, a computing device like the processing unit 202). The memory unit 204 may be configured to store information, data, content, applications, instructions, or the like, for enabling the apparatus to carry out various functions in accordance with an example embodiment of the present disclosure. For example, the memory unit 204 may be configured to store the surface information, the plurality of 3D meshes and/or the plurality of graphs. As exemplarily illustrated in FIG. 2, the memory unit 204 may be configured to store instructions for execution by the processing unit 202. As such, whether configured by hardware or software methods, or by a combination thereof, the processing unit 202 may represent an entity (for example, physically embodied in circuitry) capable of performing operations according to an embodiment of the present disclosure while configured accordingly. Thus, for example, when the processing unit 202 is embodied as the microprocessor, the processing unit 202 may be specifically configured hardware for conducting the operations described herein. Alternatively, as another example, when the processing unit 202 is embodied as an executor of software instructions, the instructions may specifically configure the processing unit 202 to perform the algorithms and/or operations described herein when the instructions are executed. The processing unit 202 may include, among other things, a clock, an arithmetic logic unit (ALU) and logic gates configured to support operation of the processing unit 202.

The communication interface 208 may comprise input interface and output interface for supporting communications to and from the system 102. The communication interface 208 may be a device or circuitry embodied in either hardware or a combination of hardware and software that is configured to receive and/or transmit data to/from the system 102. In this regard, the communication interface 208 may include, for example, an antenna (or multiple antennae) and supporting hardware and/or software for enabling communications with a wireless communication network. Additionally, or alternatively, the communication interface 208 may include the circuitry for interacting with the antenna(s) to cause transmission of signals via the antenna(s) or to handle receipt of signals received via the antenna(s). In some environments, the communication interface 208 may alternatively or additionally support wired communication. As such, for example, the communication interface 208 may include a communication modem and/or other hardware and/or software for supporting communication via cable, digital subscriber line (DSL), universal serial bus (USB) or other mechanisms.

FIG. 3 is a schematic diagram 300 that illustrates a three-dimensional (3D) mesh of the dental arch of a subject, in accordance with an example embodiment. FIG. 3 is explained in conjunction with elements of FIG. 1 and FIG. 2. The schematic diagram 300 may include a 3D mesh 302 with facets 304 of the 3D mesh 302.

In some embodiments, the system 102 may be configured to receive the surface information of at least the portion of the dental arch of the subject. The surface information may be generated by using the handheld intraoral scanning device 104. For example, the surface information may be captured in the form of one or more images of the dental arch. During a scanning session, the user such as the dentist may scan the dental arch of the subject using the handheld intraoral scanning device 104 to capture one or more images of the dental arch. In an embodiment, the dentist may scan a portion of the dental arch to capture the one or more images of the dental arch. For example, data associated with a tooth having a cavity is required to be captured. In such a case, the tooth having the cavity and nearby regions in the dental arch may be scanned by the dentist using the handheld intraoral scanning device 104. The surface information may refer to the data captured in the one or more images of the dental arch. In one or more embodiments, the surface information may be extracted from the one or more images of the dental arch. In some embodiments, the one or more images of the dental arch may be retrieved from an existing database. The database may comprise the one or more images of dental arches of a plurality of subjects. The system 102 may receive the surface information of the one or more images from the database.

In some embodiments, the system 102 may be further configured to generate the 3D mesh 302 based on the captured surface information. The 3D mesh 302 may be an initial structure required for generation of a 3D model of an object. The 3D mesh 302 may be made of a plurality of polygons having a face, vertices and edges. The 3D mesh 302 may utilize coordinates in a 3D space to represent the surface information, such as a height, width and a depth of the object. Typically, the plurality of polygons may be for example, triangles, quadrilaterals, or other types of convex polygons. For example, the 3D mesh 302 of the portion of the dental arch may represent the surface information of the portion of the dental arch in 3D. In an example, the 3D mesh 302 may have triangles as the polygons. A face of the triangle may be referred as a facet. Facets 304 of the 3D mesh 302 may represent the shape of the object, such as the dental arch in 3D. The facets 304 collectively form the 3D mesh 302 of the surface information.

The system 102 may utilize transformation techniques and software to generate the 3D mesh 302 based on the captured surface information. In an embodiment, the system 102 may utilize open source software that may utilize artificial intelligence (AI) based techniques to generate the 3D mesh 302 from the captured surface information (such as the one or more images). In such a case, the surface information may be provided to the open source software, and the transformed 3D mesh 302 may be obtained from the open source software. Based on the 3D mesh 302, the system 102 may be configured to generate the graph. Details of the generation of the graph are further provided, for example, in FIG. 4A, FIG. 4B and FIG.4C.

FIG. 4A, FIG. 4B and FIG. 4C collectively illustrate schematic diagrams for generation of the graph using the 3D mesh 302, in accordance with an example embodiment. FIG. 4A, FIG. 4B and FIG. 4C are explained in conjunction with elements of FIG. 1, FIG. 2 and FIG. 3. FIG. 4A shows a schematic diagram 400A. The schematic diagram 400A may include the facets 304 of the 3D mesh 302. The schematic diagram 400A may further include a graph 402 corresponding to the facets 304 of the 3D mesh 302.

The system 302 may generate the graph 402 corresponding to the 3D mesh 302 based on the facets 304 of the 3D mesh 302. In some embodiments, the system 102 may be configured to generate the graph 402 corresponding to the 3D mesh 302 based on a direct mapping technique. The direct mapping technique may include transforming vertices of each facet of the 3D mesh 302 into nodes of the graph 402. For example, the system 102 may transform each vertex of the facets 304 into nodes, such as nodes 402A of the graph 402. Further, the direct mapping technique may include transforming edges of each facet of the 3D mesh 302 into edges of the graph 402, to generate the graph 402. For example, the system 302 may transform each edge of the facets 304 into edges, such as edges 402B of the graph 402. In such a direct mapping technique of generating the graph 402, the nodes of the graph 402 may have any number of neighboring nodes. The label of a node can be a result of a voting scheme which uses as input labels of a facet comprising a vertex mapped to that node. Predicted labels of the nodes may be translated back to facet labels by averaging predictions of all nodes associated with the corresponding facet.

FIG. 4B shows a schematic diagram 400B. The schematic diagram 400B may include the facets 304 of the 3D mesh 302. The schematic diagram 400B may further include a graph 404 corresponding to the facets 304 of the 3D mesh 302. The system 102 may generate the graph 404 corresponding to the 3D mesh 302 based on the facets 304 of the 3D mesh 302. In some embodiments, the system 102 may be configured to generate the graph 404 corresponding to the 3D mesh 302 based on an edge mapping technique.

The edge mapping technique may include transforming edges of each facet of the 3D mesh 302 into nodes of the graph 404. The edge mapping technique may further include generating edges 404B of the graph 404 based on connection of nodes 404A of the graph 404 corresponding to a single facet of the 3D mesh 302, to generate the graph 404. If two edges of the 3D mesh 302 belong to a same facet, then corresponding nodes 404A in the graph 404 are connected to form edges 404B of the graph 404. In such an edge mapping technique of generating the graph 404, the nodes 404A may have a number of neighboring nodes as two or four. For example, two neighboring nodes may be from a border of the 3D mesh 302 or the graph 404. The label of a node can be a label of a facet with a bigger area comprising an edge mapped to that node. Predicted labels of the nodes may be translated back to facet labels by averaging predictions of all nodes associated with the corresponding facet.

FIG. 4C shows a schematic diagram 400C. The schematic diagram 400C may include the facets 304 of the 3D mesh 302. The schematic diagram 400C may further include a graph 406 corresponding to the facets 304 of the 3D mesh 302. The system 102 may generate the graph 406 corresponding to the 3D mesh 302 based on the facets 304 of the 3D mesh 302. In some embodiments, the system 102 may be configured to generate the graph 406 corresponding to the 3D mesh 302 based on a facet mapping technique.

The facet mapping technique may include transforming each facet of the 3D mesh 302 into a corresponding node of the graph 406. For example, a first facet of the facets 304 may be transformed into a first node of nodes 406A of the graph 406. Similarly, a second facet of the facets 304 may be transformed into a second node of nodes 406A of the graph 406. The facet mapping technique may further include generating edges 406B of the graph 406 based on connection of the nodes 406A of the graph 406 corresponding to the facets of the 3D mesh 302 having a common facet edge, to generate the graph 406. If two facets 304 of the 3D mesh 302 are connected, then two corresponding nodes 406A of the graph 406 are connected. The facets 304 of the 3D mesh 302 are connected if they share a common edge. In such a facet mapping technique of generating the graph 406, the nodes 406A may have the number of neighboring nodes as one, two or three. For example, the nodes with one or two neighbors are nodes from the border of the 3D mesh 302 or the graph 406. The label of a node can be a facet label mapped to that node.

Graphs 404, 406 of FIG. 4B and FIG. 4C are more suitable for processing by the GNN model 106 over the graph 402 of FIG. 4A due to limitation on the number of neighboring nodes.

In an example, the graph, such as the graph 402, the graph 404 and the graph 406 may be represented in the form of a table. The table corresponding to the graph may be provided as the input to the GNN model 106. An exemplary table corresponding to a graph is depicted as follows:

Table 1: Graph representation

| | | |
|---|---|---|
| 1 | 2 | 4 |
| 0 | 3 | -1 |
| 0 | 3 | 4 |
| 1 | 2 | 4 |
| 0 | 2 | 3 |

wherein each row of Table 1 represents a single node of the graph, such as the graph 406. Columns of the Table 1 represents neighbors for a given node of the graph 406. For example, a first row of Table 1 is node "0" of the graph 406, that may be connected with nodes "1", "2" and "4" of the graph 406. Moreover, a lack of connection may be represented by an entry "-1" in the Table 1. As the graph 406 may have an upper limit to a number of neighbors of the nodes, the system 102 may determine a maximum number of the columns of the Table 1.

In case of the direct mapping technique for generating graph 402 there may be no defined maximum number of neighboring nodes. In an example, it may be possible to limit the number of neighboring nodes to a maximum value of 5.

The system 102 may utilize one or more techniques from the direct mapping technique, the edge mapping technique, or the facet mapping technique to generate the graph, such as the graph 402, the graph 404 or the graph 406. Similarly, for multiple images of the dental arch of different subjects, the system 102 may generate the plurality of graphs. The system 102 may further obtain the label values for the plurality of 3D meshes corresponding to the multiple images of the dental arch of different subjects. The label values related to different parts of the 3D mesh (such as clinical information or annotations) e.g. different polygons or groups of polygons may be associated with the nodes and edges of the corresponding graph representation, such that the information from the mesh can be transferred into the graph representation. The generated plurality of graphs and the obtained label values may be utilized to generate the training dataset for the GNN model 106. Details of the training of the GNN model 106 are further provided, for example, in FIG. 6.

Furthermore, for training of the GNN model 106, the system 102 may determine a plurality of weights W as depicted in FIG. 5.

FIG. 5 is a schematic diagram 500 that illustrates determination and application of the plurality of weights W of the graph for training of the GNN model 106, in accordance with an example embodiment. FIG. 5 is explained in conjunction with elements of FIG. 1, FIG. 2 and FIG. 3, FIG. 4A, FIG. 4B and FIG. 4C. The schematic diagram 500 may include the GNN model 106, the graph 406 and a plurality of weights 502. The schematic diagram 500 may further include a set of predicted label values 504 output by the GNN model 106.

The system 102 may be configured to obtain the label values corresponding to the facets 304 of the 3D mesh 302. In the case of facet or node classification tasks, the label values may be a numerical value for each facet or node, the numerical value representing feature to be predicted by the GNN model 106. The label values may alternatively or additionally correspond to the global 3D mesh 302. In such cases of mesh classification tasks, the label values may be a single number for each 3D mesh 302.

Furthermore, the system 102 may determine the plurality of weights 502 for each graph, such as the graph 406 corresponding to the 3D mesh 302. The system 102 may provide the obtained label values and the graph 406 as the input to the GNN model 106. Details of obtaining the label values and providing the label values and the graph 406 as the input to the GNN model 106 are further provided, for example, in FIG. 6.

The system 102 may further apply a set of weights of the plurality of weights 502 to respective convolution layer of the GNN model 106. The system 102 may further receive the output corresponding to the set of predicted label values 504. Based on the set of predicted label values 504 and the label values, the system 102 may train the GNN model 106.

The weights of each of the nodes and/or the edges of the graph 404, 406 may be determined depending on the information provided in the vertices, edges and/or the facets 304 of the 3D mesh. Thus, the system 102 may utilize one or more techniques to determine the plurality of weights 502 that may be suitable for both the facets 304 and the edges of the 3D mesh 302.

It is pointed out that the plurality of weights 502 are weights W accounting for variability of nodes and/or edges of the graph input to the GNN model 106, as per equation 2.

The weights of each of the nodes and/or the edges of the graph 404, 406 may be determined depending on the information provided in the nodes and/or edges of the graph 404, 406. This information may be referred to also as features of nodes and or edges.

In some embodiments, to determine the plurality of weights 502, the system 102 may determine the plurality of weights 502 based on features of the nodes 404A, 406A or the connections between the nodes 404A, 406A of the graph 406. Examples of the features include, but may not limited to, a color (such as the color of the edges or facets 304 of the 3D mesh 302 in RGB format), an area of the facets 304, a normal vector associated with vertices or facets 304, a size of the edges of the facets 304, an angle between neighboring facets of the facets 304 (or a sin and cos function between the neighboring facets), an angle between the edges of the facets, a position an edge or a facet of the 3D mesh 302 in relation to a center of the one or more images associated with the 3D mesh, a universal numbering of the teeth, fluorescence color information, clinical annotations associated with a class (such as a gingiva, the tooth, conditions like caries, cracks and erosion), a number of neighboring nodes, and angular deficit features of the vertex of the facet. Such weights may be, in some embodiments, untrainable parameters of the GNN model 106 and an input to the GNN model 106 while, in other embodiments, the weights may be trainable parameters of the GNN model 106. In an embodiment, different convolution layers of the GNN model 106 inside the same GNN model 106 may use various features to determine corresponding weights.

In some embodiments, to determine the plurality of weights 502, the system 102 may be configured to order, for each node of the graph 404, 406, associated edges of the graph 404, 406 based on a criterion to obtain a sequence of ordered edges. A weight may then be assigned to each ordered edge based on a position of the each ordered edge in the sequence.

In an embodiment, the criterion may be based on an ordering rule associated with the center of the convolution. For example, the system 102 may order each edge of the graph 404, 406 such that the center of the convolution may be a part of the ordering rule, or the center of the convolution may have a fixed position in the ordering.

Based on the ordering and a relationship between a node and corresponding neighboring nodes of the graph 404, 406, the system 102 may determine each weight of the plurality of weights 502. For example, each place in the resulting sequence of the ordered edges may be assigned a weight during the training of the GNN model 106. Moreover, a number of fitted weights in the sequence may equal the maximum number of neighboring nodes in the graph 406. In case of self-looping, the number of fitted weights is the maximum number of neighboring nodes +1. Self-looping may relate to utilization of a node of interest in the convolution.

In some embodiments, different layers of the GNN model 106 may use different criteria or the ordering rules, resulting in different weights for each convolution layer of the GNN model 106. Furthermore, such a method to determine the plurality of weights 502 may require special treatment of border nodes of the graph 406. For example, in case of ordering the neighboring nodes based on a size of the edge for the graph 406, "missing" nodes may have a position, however, in case the ordering uses areas of the neighboring facets, ordering of the "missing" nodes may be difficult. In such a case, a default value of feature may be utilized for the ordering. A "missing node" may be referred to as a virtual node, located outside of the graph 406, and may be a neighbor to the border node.

In some embodiments, to determine the plurality of weights 502, the system 102 may be configured to utilize a first machine learning (ML) algorithm on features of each node of the graph 404, 406. The system 102 may thus determine the weight for each node of the graph 404, 406 based on an output of the first machine learning (ML) algorithm. The first ML algorithm may have one output value. The weight may have same value every time the corresponding node is used in a convolution layer of the set of convolution layers.

In an exemplary embodiment, the first ML algorithm may be a predictive type, configured to predict the weight associated with each node of the graph 404, 406. Moreover, the first ML algorithm may be trained together with the GNN model 106. For example, the GNN model 106 may be trained to recognize individual teeth in a 3D model of a dental arch or a jaw, estimate a dental condition such as caries, bruxism, acid reflux and the like, predict an orientation of the jaw compared to an opposing jaw model, and so forth. The features used as the input in the first ML algorithm may be different than the features used in the GNN model 106. In such a method, for each convolution layer, a separate ML algorithm may be utilized for determining the plurality of weights 502.

In some embodiments, to determine the plurality of weights 502, the system 102 may be configured to utilize a second machine learning (ML) algorithm on features of each oriented pair of neighboring nodes of the graph 404, 406. Each pair of neighboring nodes may be oriented from a first neighboring node towards a second neighboring node or vice versa. For example, neighboring nodes A and B may form an oriented pair of neighboring nodes AB or BA. Orientation of the neighboring nodes defines input order to the second machine learning algorithm.

The system 102 may thus determine the weight for each edge of the graph 404, 406 based on an output of the second machine learning (ML) algorithm. The system 102 may utilize features of two neighboring nodes of the graph 406 to calculate the weight of a corresponding edge of the graph 404, 406. The weights may be output by the second ML algorithm. The second ML algorithm may have one output value. Moreover, the second ML algorithm may be trained together with the GNN model 106. In an embodiment, the features used as the input in the second ML algorithm may be different than the features used in the GNN model 106. Also, for each convolution layer, a separate ML algorithm may be utilized for determining the plurality of weights 502. The second ML algorithm may produce non-symmetric weights as the plurality of weights 502. In some cases, a constant value may be a value of the self-looping weight or the output of the second ML algorithm with the double use of node of interest features.

In some embodiments, to determine the plurality of weights 502, the system 102 may be configured to order associated edges for each node of the graph 404, 406, based on the criterion to obtain the sequence of ordered edges. The system 102 may further be configured to provide features corresponding to the ordered associated edges to a third machine learning (ML) algorithm and to assign the weight to each ordered edge based on output of the third machine learning algorithm.

For example, the ordering may prepare the features of the nodes 404A, 406A coherently to be an input to the third ML algorithm that may produce the plurality of weights 502 for the edges. Moreover, the number of output weights may equal the maximum number of neighboring nodes in the graph 406. In case of self-looping, the maximum number of neighboring nodes may be one more than the number of output weights. Such a method may require to define features for the "missing" edges 406B or connections of the graph 406 using default values. In an embodiment, the features used as the input in the third ML algorithm may be different than the features used in the GNN model 106. Also, for each convolution layer, a separate ML algorithm may be utilized for determining the plurality of weights 502.

In some cases all possible assignment of weights 502 to nodes of the graph 404, 406 may be evaluated and an assignment of weights 502 which maximizes a value of a convolution may be used by the GNN model 106 as a value of convolution for a given node. In such case those weights 502 can be input parameters to the GNN model 106 or trainable parameters of the GNN model 106. A node weight can be a single number or a vector in which case each feature of the node can use a different weight. A number of weights 502 can be less than a number of neighboring nodes. In this case self-looping may be employed using free weights (being a part of the weights assignment process) or fixed weights (using the same weights for all nodes of the graph).

Exemplary values of node features that may form part of the input training data of the GNN model 106 are further depicted as follows:

Table 2: Exemplary values of node features

| 1.1 | 0.66 | 0.44 | -1.0 | -0.998 | 0.66 | 0.344 |
| --- | --- | --- | --- | --- | --- | --- |
| 0.345 | 1.2 | 0.76 | 0.0 | 0.1 | 0.77 | 0.55 |
| 0.55 | 0.9876 | 0.34534 | 0.66 | 0.23456 | 0.11 | 0.4646 |
| 0.77 | 0.0 | -0.88 | 0.455 | 0.566 | 0.66 | 0.65 |
| 0.2345 | -0.33 | 1.1 | 0.6778 | 0.66 | 0.67 | 0.67 |

where each row of Table 2 represents a node of the graph and each column represents a feature of graph nodes.

The system 102 determines the plurality of weights 502 based on the various methods described above. The system 102 may further apply the plurality of weights 502 on the convolution layers of the GNN model 106 for training the GNN model 106. For example, the system 102 may apply a first set of weights 502A to a first convolution layer. The first convolution layer may be configured to process the nodes and edges having the first set of weights 502A. Similarly, system 102 may apply a second set of weights 502B to a second convolution layer. The second convolution layer may be configured to process the nodes and edges having the second set of weights 502B. Moreover, the system 102 may apply an Nth set of weights 502N to an Nth convolution layer. The Nth convolution layer may be configured to process the nodes and edges having the Nth set of weights 502N. As a part of the training process, the system 102 may input the graph 404, 406 to the GNN model 106 and receive the set of predicted values 504.

The training of the GNN model 106 based on the graph 406 and the plurality of weights 502 is further described, for example, in FIG. 6.

FIG. 6 is a flowchart 600 that depicts training of the GNN model 106, in accordance with an example embodiment. FIG. 6 is explained in conjunction with elements of FIG. 1, FIG. 2 and FIG. 3, FIG. 4A, FIG. 4B, FIG. 4C and FIG. 5. The flowchart 600 may depict operations performed by at least one of the processing unit 202 of the system 102.

At step 602, the graph 404, 406 may be generated. The system 102 may be configured to generate the graph 406 corresponding to the 3D mesh 302. The 3D mesh 302 may be associated with the surface information of at least the portion of the dental arch of the subject. Details of generation of the graph 404, 406 are further provided, for example, in FIG. 4.

At step 604, ground truth data indicating features of the 3D mesh 302, to be predicted by the GNN model, may be obtained. The ground truth data may comprise the label value for each facet of the 3D mesh 302 or the label value for the complete 3D mesh 302. In an example, the label value may include value between 0 and 1. In an embodiment, the label value may be obtained from a clinical professional, such as the dentist. For example, the GNN model 106 may be trained for the task of classifying the teeth in a 3D mesh based on the type of teeth. In such a case, the 3D mesh corresponding to a single tooth in the training dataset may be assigned one label value. In another example, the GNN model 106 may be trained for the task of segmenting different portions of the dental arch in a 3D mesh. In such a case, the label value for each facet of the 3D mesh may be obtained.

It may be noted that, in some embodiments, the training dataset of the GNN model 106 may include the 3D mesh 302 or models of the dental arch or jaws mapped to the graph 404, 406 with labeled facets or edges, depending on the mapping method. Thus, algorithms that may translate the label values of the facet to the label values of the edge for annotated data may be applied.

At step 606, the graph 404, 406 and the ground truth data may be provided as the input to the GNN model 106. The graph 404, 406 may correspond to the 3D mesh 302 having label values. In an example, the graph 404, 406 may be provided in form of the table, such as Table 2. Each row and column of the table of the graph 404, 406 may correspond to a value that may be dependent on the nodes 404A, 406A and the edges 404A, 406B of the graph 404, 406.

At step 608, the set of weights of the determined plurality of weights 502 of the graph 404, 406 may be applied to each convolution layer of the set of convolution layers, wherein the set of weights corresponds to differences between features of nodes of the graph 404, 406. The set of weights may reflect a geometric relationship between the nodes of the graph 404, 406 and/or the features of the nodes of the graph 404, 406.

The set of weights applied to each convolution layer may be associated with a set of nodes or a set of edges of the graph 406 to be processed by the respective convolution layer. For example, the first set of weights 502A associated with a first set of nodes and a first set of edges of the graph 406 may be applied to the first layer of the GNN model 106. The first layer may be configured to process the first set of weights 502A. Similarly, for each convolution layer of the GNN model 106, the set of weights may be applied.

At step 610, an output of the GNN model 106 may be received. The system 102 may receive the set of predicted label values 504, associated with the features of the corresponding facets of the 3D mesh 302. The set of predicted label values 504 may indicate different segments of the at least the portion of the dental arch. For example, the GNN model 106 may output one or more probabilistic values as the set of predicted label values 504 corresponding to the facets 304 of the 3D mesh 302 or the whole 3D mesh 302. In an embodiment, the set of predicted label values 504 may be different for a tooth portion and the gingiva portion for the input graph 406. In another embodiment, the set of predicted label values 504 may be different for different types of teeth, the gingiva, the unhealthy tissues, etc. for the input graph 406. In an example, the set of predicted label values 504 may include values between 0 and 1.

At step 612, trainable parameters of the GNN model 106 may be updated iteratively, based on comparing the output data to the ground truth data, until a predefined loss function threshold is reached. Trainable parameters may comprise the set of weights determined according to the disclosure.

The system 102 may be configured to iteratively update the set of weights based on the set of predicted label values 504, until a predefined loss function threshold is reached. For example, the predefined loss function may be calculated based on a difference between the obtained label values and the output set of predicted label values 504. For training of the GNN model 106, the difference between the obtained label values and the output set of predicted label values 504 may be required to be minimal. In an embodiment, the threshold may be a value "0.3". In an exemplary scenario, a value of the predefined loss function may be 0.4, i.e., the difference between the obtained label value and the predicted label value may be 0.4. In such a case, the difference is above the threshold of "0.3". Thus, the set of weights may need to be updated, to accurately train the GNN model 106. In some embodiments, the set of weights may be iteratively updated based on a confidence score output by the GNN model 106. The confidence score indicates a confidence of the GNN model 106 to accurately output the set of predicted label values 504. The set of weights may be iteratively updated until the confidence score is less than a predefined value. For example, the predefined value may be 0.9. Thus, the system 102 may be configured to train the GNN model 106 until a desired accuracy is achieved.

It will be understood that each step of the flowchart 600 may be implemented by various means, such as hardware, firmware, processor, circuitry, and/or other communication devices associated with execution of software including one or more computer program instructions. For example, one or more of the steps described above may be embodied by computer program instructions. In this regard, the computer program instructions which embody the steps described above may be stored by the memory unit 204 of the system 102, employing an embodiment of the present disclosure. As will be appreciated, any such computer program instructions may be loaded onto a computer or other programmable apparatus (for example, hardware) to produce a machine, such that the resulting computer or other programmable apparatus implements the functions specified in the flowchart 600. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart 600. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart 600.

Accordingly, the steps of the flowchart 600 support combinations of means for performing the specified functions and combinations of operations for performing the specified functions for performing the specified functions. It will also be understood that one or more steps of the flowchart 600, and combinations of steps in the flowchart 600, may be implemented by special purpose hardware-based computer systems which perform the specified functions, or combinations of special purpose hardware and computer instructions. Fewer, more, or different steps may be provided.

Details of an application of the then trained GNN model 106 are further provided, for example, in FIG. 7.

FIG. 7 is a diagram 700 that depicts utilization of the trained GNN model 106 for the prediction task, in accordance with an example embodiment. FIG. 7 is explained in conjunction with elements of FIG. 1, FIG. 2 and FIG. 3, FIG. 4A, FIG. 4B, FIG. 4C, FIG. 5 and FIG. 6. The diagram 700 depicts steps performed by the trained GNN model 106 for predicting label values associated with facets of the 3D mesh representing at least the portion of the dental arch.

At step 702, a first 3D mesh may be received. The first 3D mesh may be associated with a first surface information of at least a portion of a first dental arch. The trained GNN model 106 may be used for various dental tasks, such as segmenting a digital 3D model of a dentition of the dental arch of the subject into a portion belonging to teeth and a part belonging to gingiva. Thus, the first 3D mesh may be provided to the trained GNN model 106 to segment the portions belonging to the teeth and the part belonging to the gingiva in the first 3D mesh.

At step 704, for such a segmentation task, the first 3D mesh may be transformed into a first graph. In an embodiment, the system 102 may be configured to generate the first graph based on the transformation of facets of the first 3D mesh into nodes and edges of the first graph. For example, the generated first graph may be input in the form of the table, such as the Table 1.

At step 706, the first graph may be input to the trained GNN model 106. In some embodiments, the input to the trained GNN model 106 may be the first 3D mesh with a list of attributes or the features associated with the different facets of the first 3D mesh, mapped or transformed into the first graph. The features of the first 3D mesh are reflected in the features of the first graph.

At step 708, a first set of predicted label values may be received. The system 102 may be configured to receive, as the output from the GNN model 106, the first set of predicted label values associated with the facets of the first 3D mesh. The first set of predicted label values may indicate different segments of the at least the portion of the first dental arch. Thus, the GNN model 106 may output the first set of predicted label values for the facets of the first 3D mesh indicating probabilities of being the tooth or the gingiva portion.

The trained GNN model 106 may further include a histogram pooling layer. Such a GNN model may be utilized for the task of facet classification or classification of the 3D mesh as shown in FIG. 8.

FIG. 8 is a schematic diagram 800 illustrating utilization of the trained GNN model 106 with a histogram pooling layer 802A for the classification task, in accordance with an example embodiment. FIG. 8 is explained in conjunction with elements of FIG. 1, FIG. 2 and FIG. 3, FIG. 4A, FIG. 4B, FIG. 4C, FIG. 5, FIG. 6 and FIG. 7. The schematic diagram 800 may include the trained GNN model 106 having the histogram pooling layer 802A, the first graph 704, a probability distribution of features 806, and a probabilistic value 808. The GNN model 106 may be trained in the same manner as previously described.

The histogram pooling layer 802A may be configured to lower the size of data (such as the first graph 704) input to the GNN model 106. Generally, the first graph 704 may have an arbitrary number of nodes. Thus, the histogram pooling layer may lower the size of the first graph 704 from any arbitrary size to a well-defined size.

A pooling layer using the descriptive statistics of features over the nodes of the graph can be extended with the histogram pooling layer which represents feature distributions over the nodes of the graph. In an example, the histogram pooling layer 802A is a collection of bins. A bin may represent a probability of finding a node of the first graph 704 with a feature value in a range. A number of the bins and corresponding ranges may be non-trainable parameters. In an embodiment, the histogram pooling layer 802A may be implemented after a convolution layer of the trained GNN model 106 and before a finite range output activation function (for example, a sigmoid function) in the trained GNN model 106.

In some embodiments, the system 102 may be configured to provide the first graph 704 as the input to the trained GNN model 106. The first graph 704 may correspond to a first 3D mesh associated with a first surface information of at least the portion of a first dental arch. For example, the first 3D mesh may include a tooth that needs to be classified as one of a type of the teeth.

The system 102 may further determine the probability distribution of features 806 associated with the nodes of the first graph 704. For example, a descriptive statistics of features over the graph nodes may be calculated for the first graph 704, to reduce the dimensionality to one. The histogram pooling layer 802A may determine discrete form of the probability distributions of the features 806. The histogram pooling layer 802A may exist after the set of convolution layers of the trained GNN model 106. The system 102 may further receive, as the output, the probabilistic value 808. The probabilistic value 808 may indicate a type of the first 3D mesh. For example, the trained GNN model 106 may output the type of the tooth as "molar" with the probabilistic value 808 of 0.87. Based on the output, the first 3D mesh may be classified as the molar tooth.

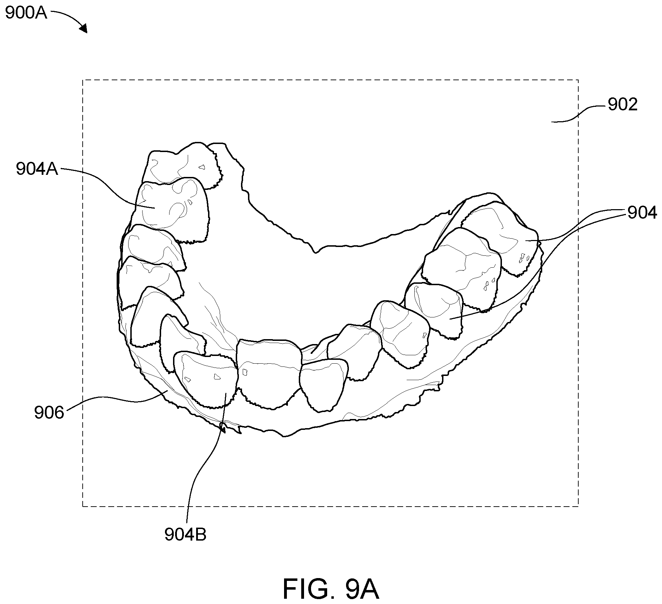

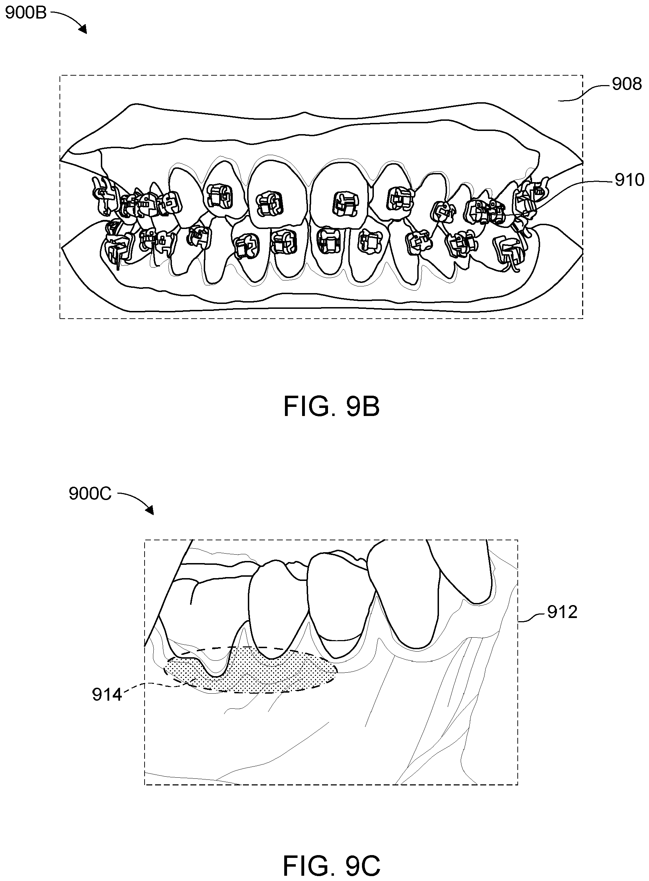

FIG. 9A, FIG. 9B and FIG. 9C illustrates exemplary diagrams depicting various applications of the trained GNN model 106, in accordance with another example embodiment. FIG. 9A, FIG. 9B and FIG. 9C are explained in conjunction with elements of FIG. 1, FIG. 2 and FIG. 3, FIG. 4A, FIG. 4B, FIG. 4C, FIG. 5 FIG. 6, FIG. 7 and FIG. 8.

FIG. 9A depicts a schematic diagram 900A. The schematic diagram 900A may include an output 902 of the trained GNN model 106. The output 902 may correspond to a segmented 3D mesh of the dental arch of the subject. The system 102 may be configured to use the computer-implemented method for the segmentation of the 3D mesh of at least the portion of the dental arch into the gingiva or the tooth.

In an exemplary scenario, the system 102 may receive the surface information of the dental arch. Based on the surface information, the system 102 may generate the 3D mesh. The 3D mesh may further be utilized to generate the graph to be input to the trained GNN model 106. The system 102 may input the graph to the trained GNN model 106. The trained GNN model 106 may provide the output 902. The output 902 may include teeth 904 and gingiva 906 segmented and visualized in different colors.

In some embodiments, the trained GNN model 106 may provide the set of predicted label values having a first value for the teeth 904 and a second value for the gingiva 906. Based on the processing of the set of predicted label values and the 3D mesh, the system 102 may provide the output 902.

The system 102 may be further configured to use the computer-implemented method for the recognition of the type of one or more teeth based on the 3D mesh of the portion of the dental arch. In such a case, the output 902 of the trained GNN model 106 may include the teeth classified or recognized as different types. For example, the output 902 may indicate a tooth 904A as a molar tooth, and a tooth 904B as an incisor tooth. The output 902 may represent the different types of teeth, for example, with a different color. In an embodiment, the different types of teeth may have a different predicted label value. Based on the processing of the different predicted label values, the system 102 may provide the output 902.

The system 102 may be further configured to use the computer-implemented method for the determination of an amount of tooth wear and scoring of the amount of the tooth wear based on the 3D mesh of the portion of the dental arch. For example, the tooth 904A may have a cavity or an enamel of the tooth 904A may be eroded. The amount of tooth wear may be represented in the output 902. In an example, the amount of tooth wear on the tooth 904A may be represented in the different color from the color of non-infected part of the tooth 904A. For example, the score of the amount of the tooth wear may vary from 0 to 1. The higher the amount of the tooth wear, higher may be the score of the amount of the tooth wear. Depending on the dental condition, the GNN may be trained on a specific training data set associated with label values relevant for the specific dental condition. The set of weights determined by the GNN upon training may vary, depending on aimed output from the trained GNN. Advantage of the method and system provided herein is disclosure of an adaptive GNN architecture, where the GNN may be designed to calculate its own weights depending on the training data set (aimed output), without any predetermined configuration.

FIG. 9B depicts a schematic diagram 900B. The schematic diagram 900B may include an output 908 of the trained GNN model 106. The output 908 may correspond to the segmented 3D mesh of the dental arch of the subject. The system 102 may be configured to use the computer-implemented method for the detection of one or more objects based on the 3D mesh of the portion of the dental arch. For example, the GNN model 106 may be trained to detect the objects, such as tooth braces 910. The trained GNN model 106 may detect the tooth braces 910 and may provide the predicted label value corresponding to the detected tooth braces 910.

FIG. 9C depicts a schematic diagram 900C. The schematic diagram 900C may include an output 912 of the trained GNN model 106. The output 912 may correspond to the segmented 3D mesh of the dental arch of the subject. The system 102 may be configured to use the computer-implemented method for detection and scoring of one or more diseases associated with a dental condition of the portion of the dental arch, based on the 3D mesh of the portion of the dental arch. The GNN model 106 may be trained to detect and score the diseases associated with the dental condition. For example, a portion 914 of the dental arch may be a portion of the gingiva having a disease such as gingivitis. The trained GNN model 106 may detect the portion 914 having gingivitis in the output 912. For example, the score of the diseases may vary from 0 to 1. Larger the portion 914 having gingivitis, the higher may be the score of the disease.

Many modifications and other embodiments of the inventions set forth herein will come to mind of one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. A computer-implemented method for training a graph neural network (GNN) model (106) comprising:

   - generating a graph (404, 406) corresponding to a three-dimensional (3D) mesh (302), wherein the 3D mesh (302) is associated with a surface information of at least a portion of a dental arch;
   - obtaining ground truth data indicating features of the 3D mesh (302) to be predicted by the GNN model (106);
   - providing, as an input, the graph (404, 406) of the 3D mesh (302) and the ground truth data to the GNN model (106), wherein the GNN model (106) comprises a set of convolution layers;
   - applying a set of weights to each convolution layer of the set of convolution layers, wherein the set of weights corresponds to differences between nodes of the graph (404, 406) ;
   - receiving, as an output of the GNN model (106) with the applied set of weights, output data indicating predicted features of the 3D mesh (302); and
   - iteratively updating trainable parameters of the GNN model (106) based on comparing the output data to the ground truth data until a predefined loss function threshold is reached.

2. The method according to claim 1, further comprising determining the set of weights by:

   - for each node of the graph (406) ordering associated edges based on a criterion to obtain a sequence of ordered edges and assigning a weight to each ordered edge based on a position of the each ordered edge in the sequence.

3. The method according to claim 1, further comprising determining the set of weights by:

   - for each node of the graph (406) applying a first machine learning algorithm to corresponding node features and assigning a weight to a corresponding node based on output of the applied first machine learning algorithm such that the weight has same value every time the corresponding node is used in a convolution layer of the set of convolution layers.

4. The method according to claim 1, further comprising determining the set of weights by:

   - for each oriented pair of neighboring nodes of the graph (406) applying a second machine learning algorithm to features of the corresponding neighboring nodes and assigning a weight to an edge comprising the corresponding neighboring nodes based on output of the applied second machine learning algorithm.

5. The method according to previous claim 1, further comprising determining the set of weights by:

   - for each node of the graph (406) ordering associated edges based on a criterion to obtain a sequence of ordered edges;
   - providing features corresponding to the sequence of ordered edges to a third machine learning algorithm; and
   - assigning a weight to each ordered edge based on output of the third machine learning algorithm.

6. The method according to any previous claim 1, further comprising assigning the set of weights to selected nodes such as to maximize a convolution value.

7.  The method according to any previous claim, wherein the set of weights are trainable parameters of the GNN model (106).

8.  The method according to any previous claim 1-6, wherein the set of weights form part of the input to the GNN model (106).

9.  The method according to any previous claim, further comprising:

    - determining distributions of node features over the nodes of the graph (406);
    - generating a histogram pooling layer by discretization of determined distributions, wherein the histogram pooling layer is defined by histogram pooling layer parameters.

10. A computer-implemented method for predicting label values associated with facets of a three-dimensional (3D) mesh representing at least a portion of a dental arch, the method comprising:

    - generating a first 3D mesh associated with a first surface information of at least a portion of a first dental arch;
    - generating a first graph based on the received first 3D mesh;
    - providing, as an input, the generated first graph to a trained graph neural network (GNN) model (106);
    - receiving, as an output, a first set of predicted label values associated with the facets of the first 3D mesh, and wherein the trained GNN model (106) is trained according to any of the claims 1 to 9.

11. A computer-implemented method for predicting label values associated with a three-dimensional (3D) mesh representing at least a portion of a dental arch, the method comprising:

    - generating a first 3D mesh associated with a first surface information of at least a portion of a first dental arch;
    - generating a first graph based on the received first 3D mesh;
    - providing, as an input, the generated first graph to a trained graph neural network (GNN) model (106);
    - receiving, as an output, a first set of predicted label values associated with the first 3D mesh, and wherein the trained GNN model (106) is trained according to any of the claims 1 to 9.

12. A computer-readable medium carrying instructions which, when executed by a computer, causes the computer to carry out the method according to any one of claims 1-11.

13. A computer program product comprising instructions which, when executed by a computer, causes the computer to carry out the method according to any one of claims 1-11.

14. A system comprising a computer capable of carrying out the method according to any one of claims 1-11.

15. Use of a trained graph neural network (GNN) model (106), trained according to any previous claim 1-9, in any one of:

    **a.** segmentation of a 3D mesh of at least a portion of a dental arch into at least one of: a gingiva or a tooth;
    **b.** detection of one or more objects based on the 3D mesh of the at least the portion of the dental arch;
    **c.** detection and scoring of one or more diseases associated with a dental condition of the at least the portion of the dental arch, based on the 3D mesh of the at least the portion of the dental arch;
    **d.** recognition of a type of one or more teeth based on the 3D mesh of the at least the portion of the dental arch; and
    **e.** determination of an amount of tooth wear and scoring of the amount of the tooth wear based on the 3D mesh of the at least the portion of the dental arch.

EP 4 586 219 A1

100

System 102

Graph neural network
(GNN) model 106

Communication
network 108

Handheld intraoral
scanning device 104

FIG. 1

200

System 102

Processing unit 202

Memory unit 204

Displaying unit 206

Communication interface 208

FIG. 2

Facets 304

Three-dimensional (3D) mesh 302

300

FIG. 3

400A

FIG. 4A

400B

FIG. 4B

400C

FIG. 4C

FIG. 5

EP 4 586 219 A1

600

Generating a graph corresponding to a three-dimensional (3D) mesh, wherein the 3D mesh is associated with a surface information of at least a portion of a dental arch 602

Obtaining ground truth data indicating features of the 3D mesh to be predicted by the GNN model 604

Providing, as an input, the graph of the 3D mesh and the ground truth data, to the GNN model, wherein the GNN model comprises at least a set of convolution layers 606

Applying a set of weights to each convolution layer of the set of convolution layers, wherein the set of weights corresponds to differences between features of nodes of the graph 608

Receiving, as an output of the GNN model with the applied set of weights, output data indicating predicted features of the 3D mesh 610

Iteratively updating trainable parameters of the GNN model based on comparing the output data to the ground truth data until a predefined loss function threshold is reached 612

FIG. 6

700 ⟍

```
┌─────────────────┐     ┌─────────────────┐     ┌─────────────────┐     ┌─────────────────┐     ┌─────────────────┐
│ Receiving first 3D │ →  │ Generating first │ →  │ Providing first  │ →  │  GNN model      │ →  │ Receiving, first set │
│   mesh 702      │     │   graph 704     │     │ graph to GNN     │     │    106          │     │ of predicted label  │
│                 │     │                 │     │  model 706      │     │                 │     │  values 708      │
└─────────────────┘     └─────────────────┘     └─────────────────┘     └─────────────────┘     └─────────────────┘
```

FIG. 7

800

```
                    First Graph 704
                         |
                         v       GNN model 106
          +------------------------------------+
          |  GNN convolution layer with weights |
          |              layer 1                |
          +------------------------------------+
                         |
                         v
          +------------------------------------+
          |  GNN convolution layer with weights |
          |              layer 2                |
          +------------------------------------+
                         |
                         v
          +------------------------------------+
          |     Sequence on convolution layers  |
          +------------------------------------+
                         |
                         v
          +------------------------------------+
          |  GNN convolution layer with weights |
          |              layer N                |
          +------------------------------------+
                         |
                         v
          +------------------------------------+
          |         Concatenation layer         |
          +------------------------------------+
                         |
  +--------------+       v
  |  Probability |   +------------------------+
  | distribution | ->|  histogram pooling layer|
  | of features  |   |          802A          |
  |     806      |   +------------------------+
  +--------------+       |
                         v
                  +------------------------+
                  |  Set of fully connected |
                  |         layers          |
                  +------------------------+
                         |
                         v
                  +------------------------+
                  | Probabilistic value 808 |
                  +------------------------+
```

FIG. 8

900A

902

904A

904

906

904B

FIG. 9A

900B

908

910

FIG. 9B

900C

912

914

FIG. 9C

Europäisches
Patentamt

European
Patent Office

Office européen
des brevets

# EUROPEAN SEARCH REPORT

**Application Number**

EP 24 15 1356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUAN LI ET AL: "A full-set tooth segmentation model based on improved PointNet++", VISUAL INTELLIGENCE, [Online] vol. 1, no. 1, 10 October 2023 (2023-10-10), XP093148395, ISSN: 2731-9008, DOI: 10.1007/s44267-023-00026-7 Retrieved from the Internet: URL:https://link.springer.com/article/10.1007/s44267-023-00026-7/fulltext.html> [retrieved on 2024-04-05] | 1-8, 10-15 | INV. G06V10/82 G06N3/045 G06V20/64 |
| Y | * abstract * * Section 3; figures 1, 5, 6 * * Section 4 * ----- | 9 | |
| X | ZHANG LINGMING ET AL: "TSGCNet: Discriminative Geometric Feature Learning with Two-Stream Graph Convolutional Network for 3D Dental Model Segmentation", 2021 IEEE/CVF CONFERENCE ON COMPUTER VISION AND PATTERN RECOGNITION (CVPR), IEEE, 20 June 2021 (2021-06-20), pages 6695-6704, XP034009196, DOI: 10.1109/CVPR46437.2021.00663 [retrieved on 2021-10-15] * abstract * * Section 3; figure 2 * ----- -/-- | 1,2,7,8, 10-15 | |

**TECHNICAL FIELDS SEARCHED (IPC)**

G06V
G06N

The present search report has been drawn up for all claims

| Place of search | Date of completion of the search | Examiner |
|---|---|---|
| The Hague | 5 April 2024 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENG YOUYI ET AL: "TeethGNN: Semantic 3D Teeth Segmentation With Graph Neural Networks", IEEE TRANSACTIONS ON VISUALIZATION AND COMPUTER GRAPHICS, vol. 29, no. 7, 1 July 2023 (2023-07-01), pages 3158-3168, XP093146926, USA ISSN: 1077-2626, DOI: 10.1109/TVCG.2022.3153501 * abstract * * Section 3; figures 2-5 * | 1,2,7,8, 10-15 | |
| Y | MUKHAIMAR AYMAN ET AL: "Robust pooling through the data mode", INTELLIGENT SYSTEMS WITH APPLICATIONS, vol. 17, 1 December 2022 (2022-12-01), page 200162, XP093148365, ISSN: 2667-3053, DOI: 10.1016/j.iswa.2022.200162 * abstract * | 9 | |
| | | | TECHNICAL FIELDS SEARCHED (IPC) |

The present search report has been drawn up for all claims

| Place of search | Date of completion of the search | Examiner |
|---|---|---|
| The Hague | 5 April 2024 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                            

& : member of the same patent family, corresponding document

EPO FORM 1503 03.82 (P04C01)